# EUROPÄISCHE PATENTSCHRIFT

(11) **EP 1 029 899 B1**
(45) Veröffentlichungstag und Bekanntmachung des Hinweises auf die Patenterteilung: **18.05.2005**
(21) Anmeldenummer: 00102381.1
(22) Anmeldetag: 04.02.2000
(51) Int. Cl.: C09B 67/22, C09B 67/46, C08K 5/34, C09B 67/00

(54) **Pigmentzubereitungen auf Basis von Diketopyrrolopyrrolpigmenten mit basischen Perylendispergatoren**
Pigment preparations based on diketopyrrolopyrrole pigments with basic perylene dispersing agents
Préparations pigmentaires contenant des pigments de dicétopyrrolopyrole et des dispersants péryléniques basiques

(30) Priorität: 17.02.1999 DE 19906494
(43) Veröffentlichungstag der Anmeldung: 23.08.2000
(73) Patentinhaber: Clariant GmbH, 65929 Frankfurt am Main (DE)
(72) Erfinder: Weber, Joachim, Dr., 65929 Frankfurt (DE); Dietz, Erwin, Dr., 61462 Königstein (DE)

(56) Entgegenhaltungen:
- EP-A- 0 360 182
- EP-A- 0 538 784
- EP-A- 0 636 666
- EP-A- 0 937 724
- DE-A- 4 037 556
- DE-A- 19 709 798
- PATENT ABSTRACTS OF JAPAN vol. 015, no. 145 (C-0823), 12. April 1991 (1991-04-12) -& JP 03 026767 A (TOYO INK MFG CO LTD), 5. Februar 1991 (1991-02-05)

## Beschreibung

Die vorliegende Erfindung betrifft neue Pigmentzubereitungen auf Basis von Diketopyrrolopyrrolpigmenten und basischen Perylendispergatoren mit verbesserten coloristischen und rheologischen Eigenschaften sowie deren Herstellung und Verwendung zum Pigmentieren von hochmolekularen Materialien.

Pigmentzubereitungen sind Kombinationen von Pigmenten und strukturell zu Pigmenten analogen Pigmentdispergatoren, die mit spezifisch wirksamen Gruppen substituiert sind. Sie werden den Pigmenten zugesetzt, um die Dispergierung in den Anwendungsmedien, insbesondere in Lacken, zu erleichtern und um die rheologischen und coloristischen Eigenschaften der Pigmente zu verbessern. Die Viskosität der hochpigmentierten Lackkonzentrate (Millbase) wird erniedrigt und die Flockung der Pigmentteilchen vermindert. Dadurch kann beispielsweise die Transparenz und der Glanz erhöht werden. Dies ist insbesondere bei Metallicpigmenten erwünscht.

Die JP-A-03-026 767 offenbart basische Sulfonsäureamide von Diketopyrrolopyrrolen und ihren Einsatz als Dispergatoren mit verschiedenen Pigmenten.

Die DE-A-197 09 798 offenbart Pigmentzubereitungen mit asymmetrischen, die US-A-4 762 569 beschreibt die Herstellung von Pigmentzubereitungen mit symmetrischen Perylen-3,4,9,10-tetracarbonsäurediimiden. Der Einsatz dieser Perylendispergatoren mit Diketopyrrolopyrrolpigmenten wurde jedoch nicht beschrieben.

Die EP-A-0 360 182 beschreibt Pigmentzubereitungen aus einem Diketopyrrolopyrrol und einem basischen Pigmentdispergator aus der Klasse der 1,8-Naphthoylenbenzimidaxol-4,5-dicarbonsäure-imide.

Es bestand bei Diketopyrrolopyrrolpigmenten ein Verbesserungsbedarf und daher die Aufgabe, Pigmentzubereitungen auf Basis Diketopyrrolopyrrolpigmenten zur Verfügung zu stellen, die den heutigen Anforderungen des Standes der Technik im Hinblick auf Coloristik, Rheologie und universelle Anwendbarkeit genügen.

Es wurde gefunden, daß die Aufgabe überraschenderweise durch Pigmentzubereitungen gelöst wird, die neben dem Diketopyrrolopyrrolpigment bestimmte symmetrische oder asymmetrische Perylen-3,4,9,10-tetracarbonsäurediimide enthalten. Es war nicht vorhersehbar, daß eine Kombination eines Diketopyrrolopyrrolpigments mit einem Pigmentdispergator, der strukturell nicht von einem Diketopyrrolopyrrol abgeleitet ist, Vorteile gegenüber dem reinen Diketopyrrolopyrrolpigment zeigt.

Gegenstand der Erfindung sind Pigmentzubereitungen, gekennzeichnet durch einen Gehalt an
a) mindestens einem Diketopyrrolopyrrolpigment oder einem ein Diketopyrrolopyrrolpigment enthaltenden Mischkristall, und
b) mindestens einem Pigmentdispergator der allgemeinen Formel (I), 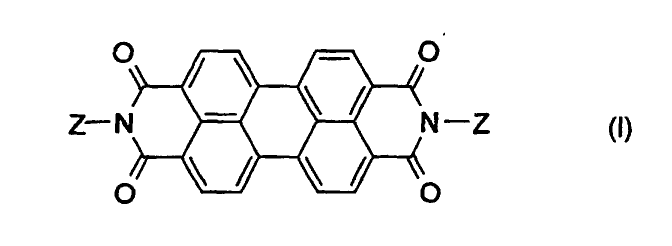
worin die beiden Reste Z gleich oder verschieden sind und Z die Bedeutung Z³ oder Z⁴ hat, mit der Maßgabe, daß beide Reste Z nicht gleichzeitig Z⁴ bedeuten,
und worin
- Z³: ein Rest der Formel (Ic) ist, 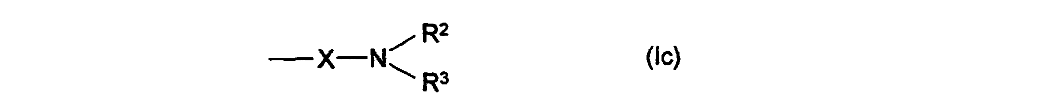
worin
- R² und R³: gleich oder verschieden sind und ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, C₂-C₄-Acyl oder C₁-C₄-Alkoxy sein und vorzugsweise 1 bis 4 an der Zahl sein können, oder
- R² und R³: zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
- X: einen verzweigten oder unverzweigten C₂-C₆-Alkylenrest oder einen C₅-C₇-Cycloalkylenrest bedeutet, der durch 1 bis 4 C₁-C₄-Alkylreste, Hydroxyreste, Hydroxyalkylreste mit 1 bis 4 Kohlenstoffatomen und/oder durch 1 bis 2 weitere C₅-C₇-Cycloalkylreste substituiert sein kann;
- Z⁴: Wasserstoff, Hydroxy, Amino, Phenyl, (C₁-C₄)-Alkyl-phenyl oder C₁-C₂₀-Alkyl ist, wobei der Phenylring und die Alkylgruppe durch ein oder mehrere, z.B. 1, 2, 3 oder 4, Substituenten aus der Gruppe Cl, Br, CN, OH, C₆H₅, Carbamoyl, C₂-C₄-Acyl und C₁-C₄-Alkoxy, z.B. Methoxy oder Ethoxy, substituiert sein können, der Phenylring auch durch NR²R³ substituiert sein kann, wobei R² und R³ die oben genannten Bedeutungen haben, oder die Alkylgruppe perfluoriert oder teilfluoriert ist.

Je nach Auswahl der Reste Z werden symmetrische oder asymmetrische Pigmentdispergatoren der Formel (I) erhalten, wobei asymmetrische Pigmentdispergatoren der Formel (I) auch solche sind, die unterschiedliche Reste Z³ haben.

Von Interesse sind beispielsweise Pigmentdispergatoren der Formel (I), worin X ein C₂-C₄-Alkylenrest oder Cyclohexylen bedeutet.

Von Interesse sind beispielsweise Pigmentdispergatoren der Formel (I), worin
- R² und R³: unabhängig voneinander ein Wasserstoffatom, eine C₁-C₆-Alkylgruppe, eine durch 1 bis 2 Substituenten aus der Gruppe Hydroxy, Acetyl, Methoxy, Ethoxy, Chlor und Brom substituierte C₁-C₆-Alkylgruppe darstellen, oder R² und R³ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden.

Von besonderem Interesse sind beispielsweise Pigmentdispergatoren der Formel (I), worin Z³ eine der Bedeutungen -(CH₂)₂-NH₂, -(CH₂)₃-NH₂, -CH₂-CH(CH₃)-NH₂, -CH₂ -C(CH₃)₂-CH₂-NH₂, 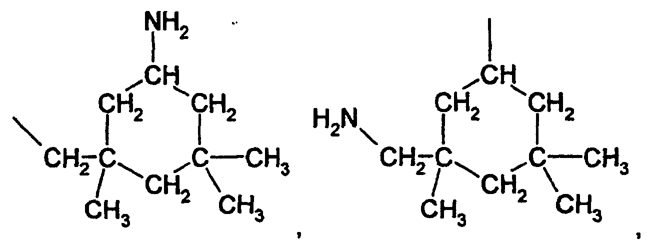 -(CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ oder -(CH₂)₃-N(CH₂-CH₃)₂ hat.

Von Interesse sind beispielsweise Pigmentdispergatoren der Formel (I), worin Z⁴ Wasserstoff, Amino, Phenyl, Benzyl, mit NR²R³ substituiertes Phenyl oder Benzyl, C₁-C₆-Alkyl oder ein durch 1 bis 2 Substituenten aus der Gruppe Hydroxy, Acetyl, Methoxy und Ethoxy substituiertes C₂-C₆-Alkyl, besonders bevorzugt Wasserstoff,

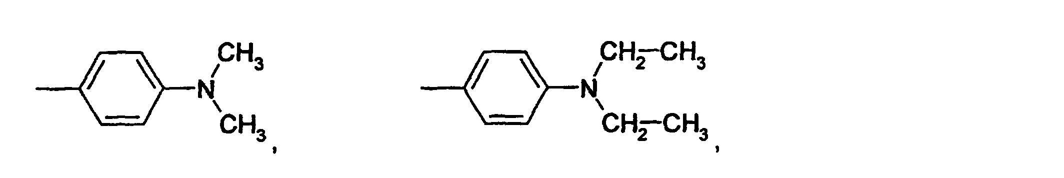

Methyl, Ethyl, Propyl, Butyl, Benzyl, Hydroxyethyl, Hydroxypropyl oder Methoxypropyl ist.

Die erfindungsgemäß als Pigmentdispergator gemäß b) eingesetzten Perylenverbindungen der allgemeinen Formel (I) lassen sich beispielsweise gemäß der DE-A-197 09 798 oder gemäß der US-A-4 762 569 herstellen.

Unter der Komponente a) werden Diketopyrrolopyrrolpigmente, Mischungen von mindestens 2, z.B. 2 oder 3, oder Mischungen mit mindestens 1, z.B. 1, 2 oder 3, Diketopyrrolopyrrolpigmenten sowie Diketopyrrolopyrrolpigmente enthaltende Mischkristalle verstanden, die auch als übliche Pigmentzubereitungen vorliegen können.

Geeignete Diketopyrrolopyrrole im Sinne der vorliegenden Erfindung sind oder enthalten beispielsweise C.I. Pigment Red 254 (C.I. No. 56 110), C.I. Pigment Red 255 (C.I. No. 561050), C.I. Pigment Red 264 (C.I. No. 561 300), C.I. Pigment Red 270, C.I. Pigment Red 272 (C.I. No. 56 1150), C.I. Pigment Orange 71 (C.I. No. 561 200), C.I. Pigment Orange 73 (C.I. No. 561 170). Die Komponente a) kann beispielsweise auch eine Mischung aus einem Diketopyrrolopyrrol- und einem Chinacridon-Pigment sein.

Die Menge der Pigmentdispergatoren gemäß b) der Formel (I) in den erfindungsgemäßen Pigmentzubereitungen kann, soweit die angestrebte Pigmentqualität nicht negativ beeinflußt wird, in weiten Grenzen schwanken, doch kommt im allgemeinen ein Gehalt von 1 bis 40 Gew.-%, vorzugsweise 2 bis 30 Gew.-%, bezogen auf das Gesamtgewicht der Pigmentzubereitung, in Betracht.

Die erfindungsgemäßen Pigmentzubereitungen können noch oberflächenaktive Mittel, sowie weitere übliche Zusatzstoffe enthalten, wie beispielsweise Füllstoffe, Stellmittel, Harze, Entschäumer, Antistaubmittel, Extender, Farbmittel zum Nuancieren, Konservierungsmittel oder Trocknungsverzögerungsmittel.

Bevorzugte Pigmentzubereitungen im Sinne der vorliegenden Erfindung bestehen im wesentlichen aus
i) 40 bis 99 Gew.-%, vorzugsweise 70 bis 98 Gew.-%, der Komponente a);
ii) 1 bis 40 Gew.-%, vorzugsweise 2 bis 30 Gew.-%, mindestens einem, vorzugsweise 1, 2 oder 3, Pigmentdispergatoren gemäß b) der Formel (I),
iii) 0 bis 20 Gew.-%, vorzugsweise 0,1 bis 15 Gew.-% an oberflächenaktiven Mitteln und
iv) 0 bis 20 Gew.-%, vorzugsweise 0,1 bis 10 Gew.-% an anderen üblichen Zusatzstoffen,
wobei die Anteile der jeweiligen Komponenten auf das Gesamtgewicht der Zubereitung (100 Gew.-%) bezogen sind.

Als oberflächenaktive Mittel kommen übliche anionische, kationische oder nichtionische Tenside oder Mischungen dieser Mittel in Betracht, als anionaktive Substanzen beispielsweise Fettsäuretauride, Fettsäure-N-methyltauride, Fettsäureisäthionate, Alkylbenzolsulfonate, Alkylnaphthalinsulfonate, Alkylphenolpolyglykolethersulfate und Fettalkoholpolyglykolethersulfate; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilöslische Harze, z.B. kolophoniummodifizierte Maleinatharze und Kondensationsprodukte auf Basis von Cyanurchlorid, Taurin, N,N-Dialkylaminoalkylamin, wie beispielsweise N,N-Diethylaminopropylamin, und p-Phenylendiamin; bevorzugt sind Harzseifen, d.h. Alkalisalze von Harzsäuren. Als kationaktive Substanzen kommen beispielsweise quarternäre Ammoniumsalze, Fettaminoxethylate, Fettaminpolyglykolether und Fettamine in Betracht. Als nichtionogene Substanzen kommen beispielsweise Aminoxide, Fettalkoholpolyglykolether, Fettsäurepolyglykolester und Alkylphenolpolyglykolether in Betracht.

Bei den erfindungsgemäßen Pigmentzubereitungen handelt es sich in der Regel um feste Systeme von rieselfähiger, pulverförmiger Beschaffenheit oder um Granulate.

Der erfindungsgemäß erzielbare Dispergiereffekt beruht vermutlich auf einer Modifizierung der Oberflächenstruktur der Basispigmente mit den Pigmentdispergatoren gemäß b). So sind in einer Reihe von Fällen die Wirksamkeit der Pigmentdispergatoren gemäß b) und die Qualität der damit erzeugten Pigmentzubereitungen abhängig vom Zeitpunkt der Zugabe der Pigmentdispergatoren gemäß b) im Herstellungsprozess des Pigments gemäß a). Die Pigmentdispergatoren gemäß b) können gleichzeitig, oder zu verschiedenen Zeitpunkten zugegeben werden oder können vor der Zugabe gemischt werden.

Die Wirksamkeit der Pigmentdispergatoren gemäß b) kann auch von ihrer Teilchengröße und Teilchenform sowie vom Umfang der belegbaren Pigmentoberfläche abhängen. Es kann vorteilhaft sein, die Pigmentdispergatoren gemäß b) erst im in Aussicht genommenen Anwendungsmedium dem Pigment gemäß a) zuzufügen. Die jeweilige optimale Konzentration der Pigmentdispergatoren gemäß b) muß durch orientierende Vorversuche ermittelt werden, da die Verbesserung der Eigenschaften der Pigmente gemäß a) nicht immer linear mit der Pigmentdispergatormenge einhergeht.

Die erfindungsgemäßen Pigmentzubereitungen können Mischungen von einem oder mehreren, vorzugsweise 1 oder 2, Pigmenten gemäß a) mit einem oder mehreren, vorzugsweise 1 oder 2, der Pigmentdispergatoren gemäß b) sein.

Gegenstand der Erfindung ist auch ein Verfahren zur Herstellung einer erfindungsgemäßen Pigmentzubereitung, dadurch gekennzeichnet, daß man den oder die Pigmentdispergator(en) gemäß b) und das oder die Pigment(e) gemäß a) miteinander mischt oder an einem beliebigen Zeitpunkt ihres Herstellungsprozesses aufeinander einwirken läßt.

Der Herstellungsprozeß eines organischen Pigments umfaßt dessen Synthese, gegebenenfalls Feinverteilung, z.B. durch Mahlung oder Umfällen, gegebenenfalls Finish, sowie die Isolierung als Preßkuchen oder als trockenes Granulat oder Pulver. Beispielsweise können die Pigmentdispergatoren gemäß b) vor oder während der Pigmentsynthese, unmittelbar vor oder während einer Feinverteilung oder eines anschließenden Finish zugegeben werden. Dabei können Temperaturen von beispielsweise 0 bis 200 °C auftreten. Selbstverständlich können die Pigmentdispergatoren gemäß b) auch in Teilportionen zu unterschiedlichen Zeiten zugegeben werden.

Die Zugabe der Pigmentdispergatoren gemäß b) im Rahmen einer Feinverteilung erfolgt beispielsweise vor oder während einer Trockenmahlung eines Rohpigments mit oder ohne zusätzliche Mahlhilfsmittel auf einer Roll- oder Schwingmühle, oder vor oder während einer Naßmahlung eines Rohpigments in wäßrigem, wäßrig-organischem oder organischem Mahlmedium, beispielsweise auf einer Perlmühle.

Gleichfalls bewährt hat sich die Zugabe der Pigmentdispergatoren gemäß b) vor oder nach einem Finish des Pigments gemäß a) in wäßrigem, wäßrig-alkalischem, wäßrig-organischem oder organischem Medium. Die Pigmentdispergatoren gemäß b) können auch dem wasserfeuchten Pigmentpreßkuchen vor der Trocknung zugesetzt und eingearbeitet werden, wobei die Pigmentdispergatoren gemäß b) selbst ebenfalls als Preßkuchen vorliegen können. Es ist weiterhin möglich, Trockenmischungen von Pulvern oder Granulaten der Pigmentdispergatoren gemäß b) mit dem Pulver oder Granulat eines oder mehrerer Pigmente gemäß a) vorzunehmen.

Die nach der vorliegenden Erfindung erhältlichen Pigmentzubereitungen zeichnen sich aus durch ihre hervorragenden coloristischen und rheologischen Eigenschaften, insbesondere beispielsweise durch eine hervorragende Rheologie, hohe Flockungsstabilität, hohe Transparenz, leichte Dispergierbarkeit, gutes Glanzverhalten, hohe Farbstärke, einwandfreie Überlackier- und Lösemittelechtheiten sowie sehr gute Wetterechtheit. Sie sind für den Einsatz sowohl in lösemittelhaltigen als auch in wäßrigen Systemen geeignet.

Die erfindungsgemäß hergestellten Pigmentzubereitungen lassen sich zum Pigmentieren von hochmolekularen organischen Materialien natürlicher oder synthetischer Herkunft einsetzen, z.B. von Kunststoffen, Harzen, Lacken, Anstrichfarben oder elektrophotographischen Tonern und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von vorzugsweise 0,05 bis 30 Gew.-%, vorzugsweise 0,1 bis 10 Gew.-% ein.

Die erfindungsgemäßen Pigmentzubereitungen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzubereitungen als Farbmittel in Ink-Jet Tinten auf wäßriger und nichtwäßriger Basis sowie in solchen Tinten, die nach dem hot-melt-Verfahren arbeiten, geeignet.

Weiterhin sind die erfindungsgemäßen Pigmentzubereitungen auch als Farbmittel für Farbfilter sowohl für die additive wie subtraktive Farberzeugung geeignet.

Es ist auch möglich, daß erst im Anwendungsmedium die Pigmentdispergatoren gemäß b) dem Pigment gemäß a), oder umgekehrt, zugegeben werden. Gegenstand der Erfindung ist daher auch eine Pigmentpräparation, bestehend im wesentlichen aus dem besagten Pigment gemäß a), den besagten Pigmentdispergatoren gemäß b), dem besagten hochmolekularen organischen Material, insbesondere Lack, gegebenenfalls oberflächenaktiven Mitteln und/oder weiteren üblichen Zusatzstoffen. Die Gesamtmenge an Pigment gemäß a) plus Pigmentdispergatoren gemäß b) ist zweckmäßigerweise 0,05 bis 30 Gew.-%, vorzugsweise 0,1 bis 10 Gew.-%, bezogen auf das Gesamtgewicht der Pigmentpräparation.

Zur Beurteilung der Eigenschaften der nach der Erfindung hergestellten Pigmentzubereitungen auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.

Die Bestimmung der Farbstärke und des Farbtons erfolgte nach DIN 55986. Die Rheologie des Mahlguts nach der Dispergierung (Millbase-Rheologie) wurde visuell anhand der folgenden fünfstufigen Skala bewertet
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt. Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt. Die Bestimmung der Lösemittelechtheit erfolgte nach DIN 55976. Die Bestimmung der Überlackierechtheit erfolgte nach DIN 53221.

In den nachfolgenden Beispielen beziehen sich Teile jeweils auf Gewichtsteile und Prozente jeweils auf Gewichtsprozente der so beschriebenen Substanzen.

### Beispiel 1a

In einem Autoklaven werden 900 Teile Wasser vorgelegt, 40,5 Teile Perylen-3,4,9,10-tetracarbonsäuremonoanhydridmonomethylimid eingetragen und 51,6 Teile N-(2-Aminoethyl)-piperazin zugegeben. Anschließend wird unter Druck auf 150°C erhitzt und 5 Stunden bei 150 °C gerührt. Nach dem Abkühlen auf 25 °C wird der Pigmentdispergator abgesaugt und mit Wasser neutral gewaschen.
Man erhält 133,5 Teile Presskuchen Pigmentdispergator 39,4 %ig. Ein Teil wird bei 80°C getrocknet.

| | | |
|---|---|---|
| Analyse | Ber. | 10,6 % N |
| | Gef. | 10,3 % N |

¹H-NMR (D₂SO₄): δ 8,7; 6,6; 6,4; 4,5; 3,8; 3,5; 3,2 ppm.

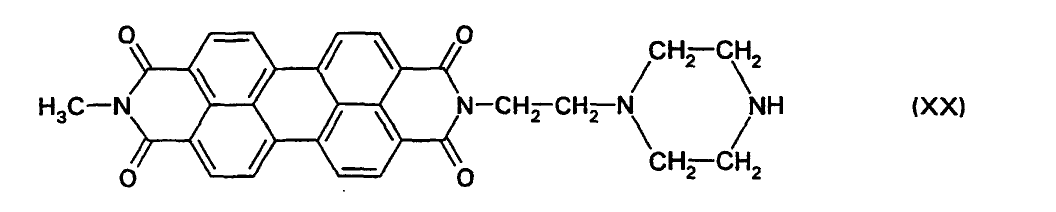

### Beispiel 1b

20 Teile eines handelsüblichen Diketopyrrolopyrrol-Pigments (C.I. Pigment Red 264) werden mit 1 Teil Pigmentdispergator der Formel XX, hergestellt gemäß Beispiel 1a, mechanisch gemischt.

Man erhält eine Pigmentzubereitung, die im HS-Lack transparente und farbstarke Lackierungen liefert. Die Viskosität beträgt 1.7 s. Die Glanzmessung ergibt den Wert 70. Die Metalliclackierung ist farbstark und brillant.

### Beispiel 2a

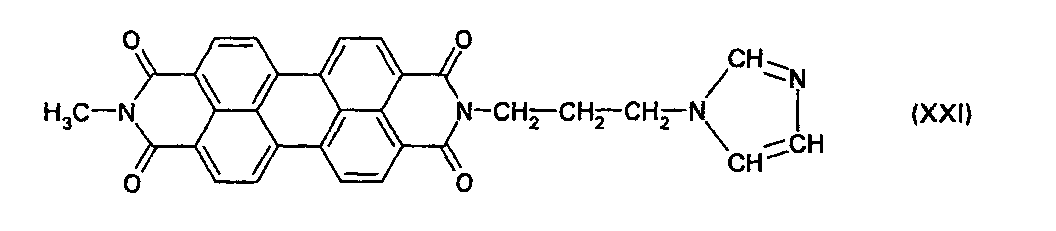

In einem Autoklaven werden 900 Teile Wasser vorgelegt, 40,5 Teile Perylen-3,4,9,10-tetracarbonsäuremonoanhydridmonomethylimid eingetragen und 50 Teile 1-(3-Aminopropyl)-imidazol zugegeben. Anschließend wird unter Druck auf 150 °C erhitzt und 5 Stunden bei 150°C gerührt. Nach dem Abkühlen auf 25 °C wird der Pigmentdispergator abgesaugt und mit Wasser neutral gewaschen.
Man erhält 164 Teile Presskuchen Pigmentdispergator 31,4 %ig. Ein Teil wird bei 80°C getrocknet.

| | | |
|---|---|---|
| Analyse | Ber. | 10,9 % N |
| | Gef. | 10,9 % N |

¹H-NMR (D₂SO₄): δ 8,7; 8,0; 7,0; 4,1; 4,0; 3,5; 2,1 ppm.

### Beispiel 2b

20 Teile eines handelsüblichen Diketopyrrolopyrrol-Pigments (C.I. Pigment Red 264) werden mit 1 Teil Pigmentdispergator der Formel XXI, hergestellt gemäß Beispiel 2a, mechanisch gemischt.
Man erhält eine Pigmentzubereitung, die im HS-Lack transparente und farbstarke Lackierungen liefert. Die Viskosität beträgt 4.5 s. Die Glanzmessung ergibt den Wert 70. Die Metalliclackierung ist farbstark und brillant. Die Lösemittelechtheit der Pigmentzubereitung ist sehr gut.

### Beispiel 3a

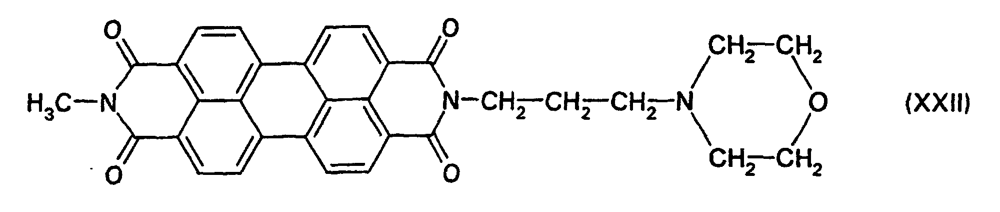

In einem Autoklaven werden 900 Teile Wasser vorgelegt, 40,5 Teile Perylen-3,4,9,1 0-tetracarbonsäuremonoanhydridmonomethylimid eingetragen und 57,6 Teile N-(3-Aminopropyl)-morpholin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 330,5 Teile Presskuchen Pigmentdispergator 16,8 %ig. Ein Teil wird bei 80 °C getrocknet.

| | | |
|---|---|---|
| Analyse | Ber. | 7,9 % N |
| | Gef. | 7,7 % N |

¹H-NMR (D₂SO₄): δ 8,7; 4,2; 3,9; 3,6; 3,5; 3,2; 3,0; 2,9; 2,0 ppm.

### Beispiel 3b

20 Teile eines handelsüblichen Diketopyrrolopyrrol-Pigments (C.I. Pigment Red 264) werden mit 1 Teil Pigmentdispergator der Formel XXII, hergestellt gemäß Beispiel 3a, mechanisch gemischt.
Man erhält eine Pigmentzubereitung, die im HS-Lack transparente und farbstarke Lackierungen liefert. Die Viskosität beträgt 2.3 s. Die Glanzmessung ergibt den Wert 76. Die Metalliclackierung ist farbstark und brillant.

### Beispiel 4a

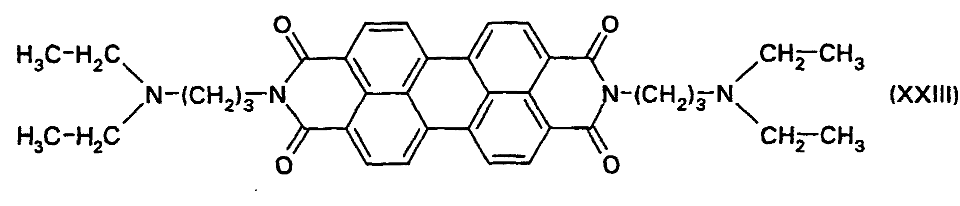

Der Pigmentdispergator der Formel XXIII wird gemäß US-PS 4,762,569, Beispiel 1, hergestellt.

| | | |
|---|---|---|
| Analyse | Ber. | 9,1 % N |
| | Gef. | 8,8 % N |

¹H-NMR (D₂SO₄): δ 8,7; 4,1; 2,9; 2,8; 1,9 und 0,9 ppm

### Beispiel 4b

20 Teile eines handelsüblichen Diketopyrrolopyrrol-Pigments (C.I. Pigment Red 264) werden mit 1 Teil Pigmentdispergator der Formel XXIII, hergestellt gemäß Beispiel 4a, mechanisch gemischt.
Man erhält eine Pigmentzubereitung, die im HS-Lack transparente und farbstarke Lackierungen liefert. Die Viskosität beträgt 1.4 s. Die Glanzmessung ergibt den Wert 77. Die Metalliclackierung ist farbstark und brillant.

### Beispiel 5a

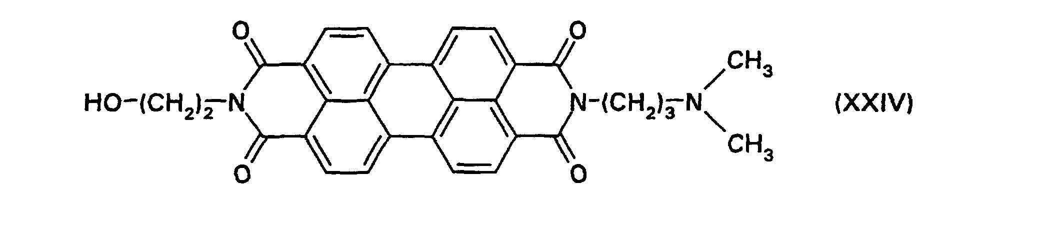

In einem Autoklaven werden 300 Teile Wasser vorgelegt, 22,7 Teile Perylen-3,4,9,10-tetracarbonsäuremonoanhydridmonohydroxyethylimid eingetragen und 10,2 Teile Dimethylaminopropylamin zugegeben. Anschließend wird unter Druck auf 150°C erhitzt und 5 Stunden bei 150°C gerührt. Nach dem Abkühlen auf 25°C wird der Pigmentdispergator abgesaugt und mit Wasser neutral gewaschen.
Man erhält 81,4 Teile Presskuchen Pigmentdispergator 32,7 %ig. Ein Teil wird bei 80°C getrocknet.

| | | |
|---|---|---|
| Analyse | Ber. | 8,1 % N |
| | Gef. | 7,9 % N |

¹H-NMR (D₂SO₄): δ 8,7; 5,2; 4,5; 4,4; 4,2; 2,9; 2,5; 2,0 ppm.

### Beispiel 5b

20 Teile eines handelsüblichen Diketopyrrolopyrrol-Pigments (C.I. Pigment Red 264) werden mit 1 Teil Pigmentdispergator der Formel XXIV, hergestellt gemäß Beispiel 5a, mechanisch gemischt.
Man erhält eine Pigmentzubereitung, die im HS-Lack transparente und farbstarke Lackierungen liefert. Im PUR-Lack werden ebenfalls transparente und farbstarke Lackierungen erhalten, auch die Metalliclackierung ist farbstark. Die Lösemittelechtheit der Pigmentzubereitung ist sehr gut.

### Beispiel 6a

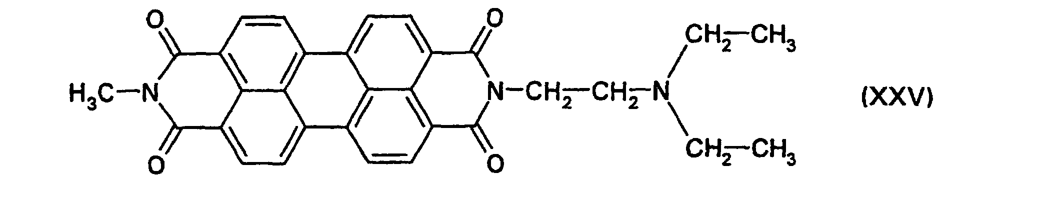

In einem Autoklaven werden 450 Teile Wasser vorgelegt, 37 Teile Perylen-3,4,9,10-tetracarbonsäuremonoanhydridmonomethylimid eingetragen und 20,9 Teile Diethylaminoethylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 153,6 Teile Presskuchen Pigmentdispergator 29,7 %ig. Ein Teil wird bei 80 °C getrocknet.

| | | |
|---|---|---|
| Analyse | Ber. | 8,3 % N |
| | Gef. | 8,7 % N |

¹H-NMR (D₂SO₄): δ 8,7; 4,4; 3,5; 3,2; 3,0; 1,0 ppm.

### Beispiel 6b

20 Teile eines handelsüblichen Diketopyrrolopyrrol-Pigments (C.I. Pigment Red 264) werden mit 1 Teil Pigmentdispergator der Formel XXV, hergestellt gemäß Beispiel 6a, mechanisch gemischt.
Man erhält eine Pigmentzubereitung, die im HS-Lack transparente und farbstarke Lackierungen liefert. Die Viskosität beträgt 1.5 s. Die Glanzmessung ergibt den Wert 82. Die Metalliclackierung ist farbstark und brillant. Die Lösemittelechtheit der Pigmentzubereitung ist sehr gut.

### Beispiel 7a

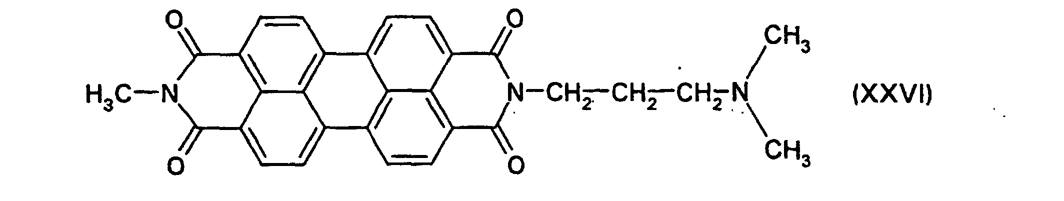

In einem Autoklaven werden 900 Teile Wasser vorgelegt, 60,8 Teile Perylen-3,4,9,10-tetracarbonsäuremonoanhydridmonomethylimid eingetragen und 30,6 Teile Dimethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 209,1 Teile Presskuchen Pigmentdispergator 34,0 %ig. Ein Teil wird bei 80 °C getrocknet.

| | | |
|---|---|---|
| Analyse | Ber. | 8,6 % N |
| | Gef. | 8,3 % N |

¹H-NMR (D₂SO₄): δ 8,7; 4,1; 3,5; 2,9; 2,5; 1,9 ppm.

### Beispiel 7b

20 Teile eines handelsüblichen Diketopyrrolopyrrol-Pigments (C.I. Pigment Red 264) werden mit 1 Teil Pigmentdispergator der Formel XXVI, hergestellt gemäß Beispiel 7a, mechanisch gemischt.
Man erhält eine Pigmentzubereitung, die im HS-Lack transparente und farbstarke Lackierungen liefert. Die Viskosität beträgt 1.0 s. Die Glanzmessung ergibt den Wert 82. Die Metalliclackierung ist farbstark und brillant. Die Lösemittelechtheit der Pigmentzubereitung ist sehr gut.

### Beispiel 8a

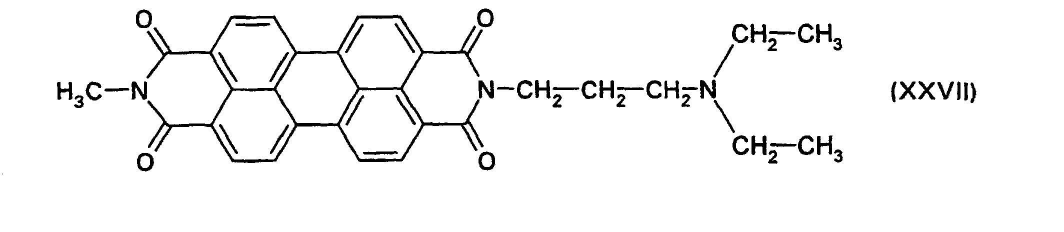

In einem Autoklaven werden 900 Teile Wasser vorgelegt, 60,8 Teile Perylen-3,4,9,10-tetracarbonsäuremonoanhydridmonomethylimid eingetragen und 39 Teile Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 274,9 Teile Presskuchen Pigmentdispergator 25,8 %ig. Ein Teil wird bei 80 °C getrocknet.

| | | |
|---|---|---|
| Analyse | Ber. | 8,1 % N |
| | Gef. | 8,0 % N |

¹H-NMR (D₂SO₄): δ 8,7; 4,1; 3,5; 2,8; 1,9; 0,9 ppm.

### Beispiel 8b

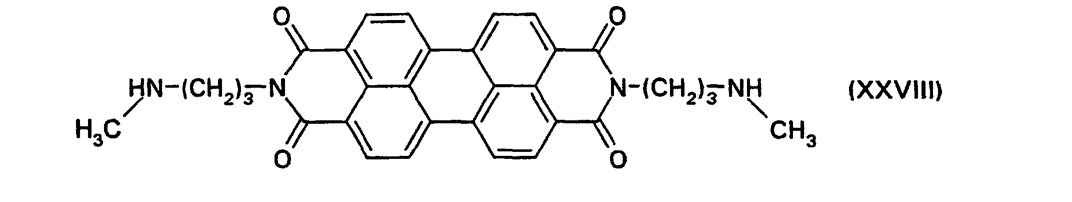

In einem Autoklaven werden 500 Teile Wasser vorgelegt, 189,7 Teile Presskuchen Perylen-3,4,9,10-tetracarbonsäuredianhydrid 20,7 %ig eingetragen und 26,4 Teile Methylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 145,8 Teile Presskuchen Pigmentdispergator 38,8 %ig. Ein Teil wird bei 80 °C getrocknet.

| | | |
|---|---|---|
| Analyse | Ber. | 10,5 % N |
| | Gef. | 10,4 % N |

¹H-NMR (D₂SO₄): δ 8,5; 5,6; 4,0; 2,7; 2,3; 1,8 ppm.

### Beispiel 8c

20 Teile eines handelsüblichen Diketopyrrolopyrrol-Pigments (C.I. Pigment Red 264) werden mit 1 Teil Pigmentdispergator der Formel XXVII, hergestellt gemäß Beispiel 8a, und mit 1 Teil Pigmentdispergator der Formel XXVIII, hergestellt gemäß Beispiel 8b, mechanisch gemischt.
Man erhält eine Pigmentzubereitung, die im HS-Lack transparente und farbstarke Lackierungen liefert. Die Rheologie wird mit 4 bewertet, die Viskosität beträgt 1.9 s. Die Glanzmessung ergibt den Wert 82. Die Metalliclackierung ist farbstark und brillant.
Mit dem für die Pigmentzubereitung verwendeten handelsüblichen Diketopyrrolopyrrolpigment (C.I. Pigment Red 264) wurde im HS-Lack ebenfalls eine Lackierung hergestellt. Der Vergleich der Lackierungen ergibt, daß ohne Einsatz eines Pigmentdispergators die Lackierung deckender ist, die Rheologie wird nur mit 3 bewertet, die Viskosität ist so hoch, daß sie mit dem Viskospatel nicht meßbar ist, der Glanzmessung ergibt einen Wert von lediglich 23 und die Metalliclackierung ist farbschwächer und fahl.

### Beispiel 9a

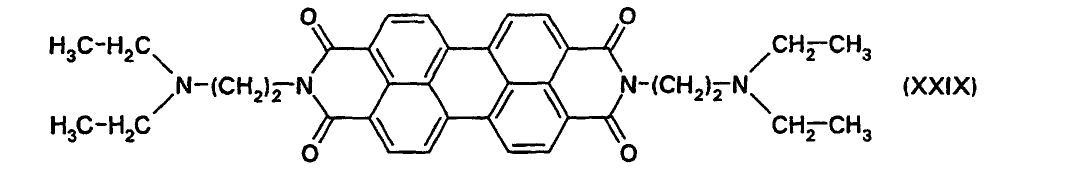

In einem Autoklaven werden 500 Teile Wasser vorgelegt, 189,7 Teile Presskuchen Perylen-3,4,9,10-tetracarbonsäuredianhydrid 20,7 %ig eingetragen und 34,8 Teile Diethylaminoethylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 130 Teile Presskuchen Pigmentdispergator 43,2 %ig. Ein Teil wird bei 80 °C getrocknet.

| | | |
|---|---|---|
| Analyse | Ber. | 9,5 % N |
| | Gef. | 9,5 % N |

¹H-NMR (D₂SO₄): δ 8,5; 4,2; 3,0; 2,8; 0,8 ppm.

### Beispiel 9b

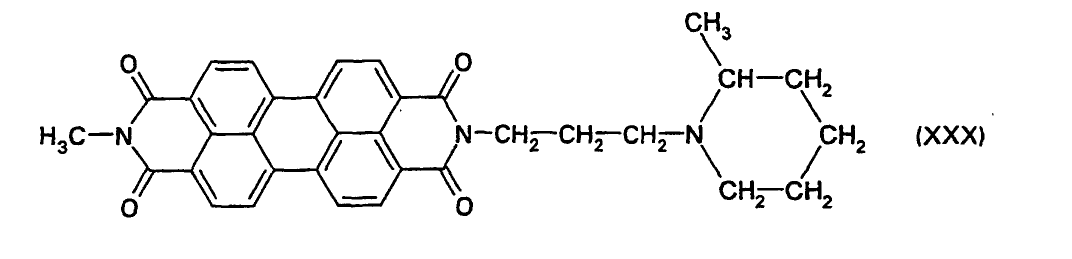

In einem Autoklaven werden 900 Teile Wasser vorgelegt, 40,5 Teile Perylen-3,4,9,10-tetracarbonsäuremonoanhydridmonomethylimid eingetragen und 62,4 Teile 1-(3-Aminopropyl)-2-pipecolin zugegeben. Anschließend wird unter Druck auf 150 °C erhitzt und 5 Stunden bei 150°C gerührt. Nach dem Abkühlen auf 25 °C wird der Pigmentdispergator abgesaugt und mit Wasser neutral gewaschen.
Man erhält 189,8 Teile Presskuchen Pigmentdispergator 31,1 %ig. Ein Teil wird bei 80°C getrocknet.

| | | |
|---|---|---|
| Analyse | Ber. | 7,7 % N |
| | Gef. | 7,7 % N |

¹H-NMR (D₂SO₄): δ 8,7; 4,1; 3,5; 3,1; 2,8; 2,5; 1,9; 1,3 ppm.

### Beispiel 9c

20 Teile eines handelsüblichen Diketopyrrolopyrrol-Pigments (C.I. Pigment Red 264) werden mit 1 Teil Pigmentdispergator der Formel XXIX, hergestellt gemäß Beispiel 9a, und mit 1 Teil Pigmentdispergator der Formel XXX, hergestellt gemäß Beispiel 9b, mechanisch gemischt.
Man erhält eine Pigmentzubereitung, die im HS-Lack transparente und farbstarke Lackierungen liefert. Die Viskosität beträgt 1.3 s. Die Glanzmessung ergibt den Wert 80. Die Metalliclackierung ist farbstark und brillant.
Im PE-Lack liefert die Pigmentzubereitung ebenfalls transparente und farbstarke Lackierungen, auch die Metalliclackierung ist farbstark und brillant.
Mit dem für die Pigmentzubereitung verwendeten handelsüblichen Diketopyrrolopyrrolpigment (C.I. Pigment Red 264) wurde im PE-Lack ebenfalls eine Lackierung hergestellt. Der Vergleich der Lackierungen im PE-Lack ergibt, daß ohne Einsatz eines Pigmentdispergators die Lackierung wesentlich deckender und farbschwächer ist, auch die Metalliclackierung ist farbschwächer und fahl.

### Beispiel 10a

In einem Autoklaven werden 500 Teile Wasser vorgelegt, 189,7 Teile Presskuchen Perylen-3,4,9,10-tetracarbonsäuredianhydrid 20,7 %ig eingetragen und 52 Teile Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 138,2 Teile Presskuchen Pigmentdispergator 45,2 %ig der in Beispiel 4a abgebildeten Formel XXIII. Ein Teil wird bei 80°C getrocknet.

| | | |
|---|---|---|
| Analyse | Ber. | 9,1 % N |
| | Gef. | 9,1 % N |

¹H-NMR (D₂SO₄): δ 8,7; 4,1; 2,8; 1,9 und 0,9 ppm

### Beispiel 10b

10 Teile eines handelsüblichen Diketopyrrolopyrrol-Pigments (C.I. Pigment Red 254) werden mit 1 Teil Pigmentdispergator der Formel XXIII, hergestellt gemäß Beispiel 10a, mechanisch gemischt.
Man erhält eine Pigmentzubereitung, die im HS-Lack transparente und farbstarke Lackierungen liefert. Die Viskosität beträgt 1.5 s. Die Metalliclackierung ist farbstark und brillant.

### Beispiel 11a

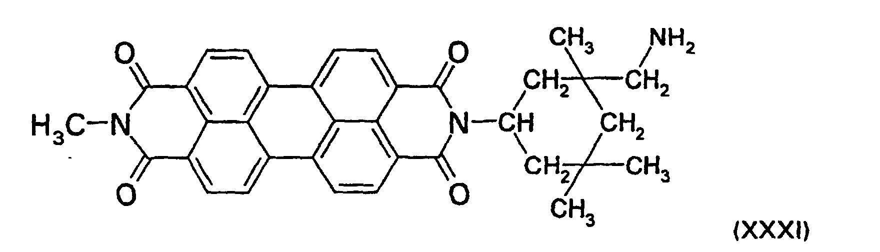

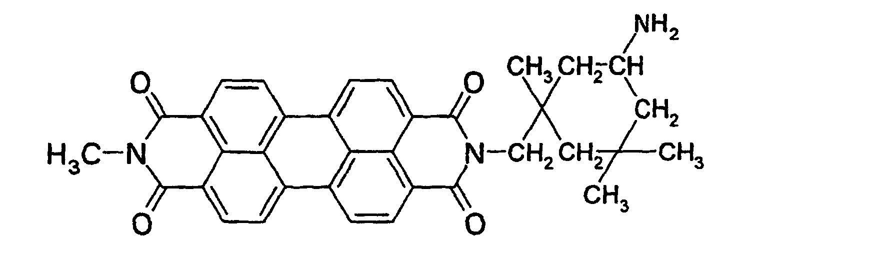

In einem Autoklaven werden 900 Teile Wasser vorgelegt, 40,5 Teile Perylen-3,4,9,10-tetracarbonsäuremonoanhydridmonomethylimid eingetragen und 68 Teile Isophorondiamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 215,9 Teile Presskuchen Pigmentdispergator 24,9 %ig, der aus einem Gemisch gemäß Formel XXXI besteht. Ein Teil wird bei 80 °C getrocknet.

| | | |
|---|---|---|
| Analyse | Ber. | 7,5 % N |
| | Gef. | 7,3 % N |

¹H-NMR (D₂SO₄): δ 8,7; 4,0; 3,5; 3,2; 2,6; 2,0; 1,6; 1,4; 1,2; 1,0; 0,8; 0,7 ppm

### Beispiel 11b

30 Teile eines handelsüblichen Diketopyrrolopyrrol-Pigments (C.I. Pigment Red 264) werden mit 1,5 Teilen Pigmentdispergator der Formel XXXI, hergestellt gemäß Beispiel 11 a mechanisch gemischt.
Man erhält eine Pigmentzubereitung, die im AM-Lack transparente und farbstarke Lackierungen liefert. Die Viskosität beträgt 6.5 s. Die Glanzmessung ergibt den Wert 70. Die Überlackierechtheit ist sehr gut.
Mit dem für die Pigmentzubereitung verwendeten handelsüblichen Diketopyrrolopyrrolpigment (C.I. Pigment Red 264) wurde im AM-Lack ebenfalls eine Lackierung hergestellt. Der Vergleich der Lackierungen im AM-Lack ergibt, daß ohne Einsatz eines Pigmentdispergators die Lackierung wesentlich deckender ist, die Viskosität ist so hoch, daß sie mit dem Viskospatel nicht meßbar ist, der Glanz ist wegen der starken Flockung ebenfalls nicht meßbar.
Im PE-Lack liefert die Pigmentzubereitung transparente Lackierungen, die Rheologie wird mit 4 bewertet, die Viskosität beträgt 2.3 s und die Metalliclackierung ist farbstark und brillant.
Mit dem für die Pigmentzubereitung verwendeten handelsüblichen Diketopyrrolopyrrolpigment (C.I. Pigment Red 264) wurde im PE-Lack ebenfalls eine Lackierung hergestellt. Der Vergleich der Lackierungen im PE-Lack ergibt, daß ohne Einsatz eines Pigmentdispergators die Lackierung wesentlich deckender ist, die Rheologie wird lediglich mit 3 bewertet, die Viskosität beträgt 4.5 s und die Metalliclackierung ist farbschwächer und fahl.

### Beispiel 12

272,9 Teile tert-Amylalkohol werden vorgelegt, 80 Teile werden abdestilliert. Dann werden 13,8 Teile Natrium eingetragen. Es wird bei Siedetemperatur solange gerührt, bis das Natrium vollständig umgesetzt ist. Bei 95°C werden 41,7 Teile p-Chlorbenzonitril eingetragen, danach werden 45,5 Teile Bernsteinsäurediisopropylester innerhalb 2 h zugetropft. Es wird zum Sieden erhitzt, 4 h bei Siedetemperatur gerührt und die entstandene Reaktionsmischung auf 60°C abgekühlt. In einem zweiten Rührgefäß werden 100 Teile Wasser und 210 Teile Eis vorgelegt und die Reaktionsmischung auf diese Eiswasservorlage geschüttet. Die entstandene Suspension wird in einem Druckbehälter auf 110°C erhitzt und 5 h bei 110°C gerührt. Nach dem Abkühlen auf Raumtemperatur werden 6,3 Teile Presskuchen Pigmentdispergator 39,4 %ig der Formel (XX), hergestellt gemäß Beispiel 1a, zugeben. Nach Erhitzen auf Siedetemperatur wird 2 h bei Siedetemperatur gerührt. Dann wird durch eine Wasserdampfdestillation der tert.-Amylalkohol entfernt, die wässrige Suspension wird filtriert, der Presskuchen wird mit Wasser gewaschen und bei 80°C im Umluftschrank getrocknet. Man erhält 46,3 g Granulat einer Pigmentzubereitung auf Basis Pigment Red 254. Das Granulat wird auf einer Labormühle pulverisiert.
Die Pigmentzubereitung liefert im AM-Lack farbstarke Lackierungen. Die Rheologie wird mit 4 bewertet, die Viskosität beträgt 5.1 s. Die Glanzmessung ergibt den Wert 71.

## Patentansprüche

1. Pigmentzubereitung, **gekennzeichnet durch** einen Gehalt an
a) mindestens einem Diketopyrrolopyrrolpigment oder einem ein Diketopyrrolopyrrolpigment enthaltenden Mischkristall, und
b) mindestens einem Pigmentdispergator der allgemeinen Formel (I), 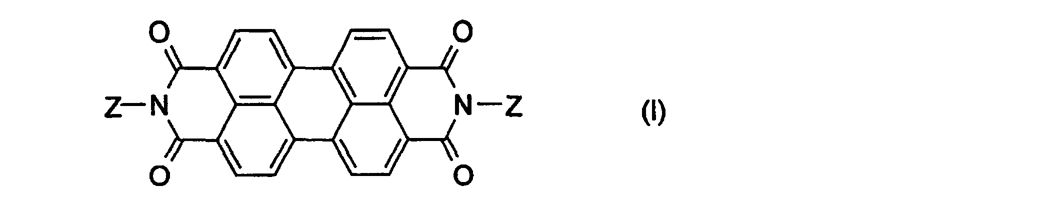
worin die beiden Reste Z gleich oder verschieden sind und Z die Bedeutung Z³ oder Z⁴ hat, mit der Maßgabe, daß beide Reste Z nicht gleichzeitig Z⁴ bedeuten, und worin
Z³ ein Rest der Formel (Ic) ist, 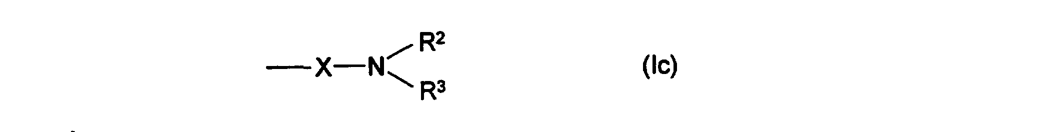
worin
R² und R³ gleich oder verschieden sind und ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, C₂-C₄-Acyl oder C₁-C₄-Alkoxy sein können, oder
R² und R³ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
X einen verzweigten oder unverzweigten C₂-C₆-Alkylenrest oder einen C₅-C₇-Cycloalkylenrest bedeutet, der **durch** 1 bis 4 C₁-C₄-Alkylreste, Hydroxyreste, Hydroxyalkylreste mit 1 bis 4 Kohlenstoffatomen und/oder **durch** 1 bis 2 weitere C₅-C₇-Cycloalkylreste substituiert sein kann;
Z⁴ Wasserstoff, Hydroxy, Amino, Phenyl, (C₁-C₄)-Alkyl-phenyl oder C₁-C₂₀-Alkyl ist, wobei der Phenylring und die Alkylgruppe **durch** ein oder mehrere Substituenten aus der Gruppe Cl, Br, CN, OH, C₆H₅, Carbamoyl, C₂-C₄-Acyl und C₁-C₄-Alkoxy substituiert sein können, der Phenylring auch **durch** NR²R³ substituiert sein kann oder die Alkylgruppe perfluoriert oder teilfluoriert ist.

2. Pigmentzubereitung nach Anspruch 1, **dadurch gekennzeichnet, daß** X C₂-C₄-Alkylen oder Cyclohexylen bedeuten.

3. Pigmentzubereitung nach Anspruch 1 oder 2, **dadurch gekennzeichnet, daß** R² und R³ gleich oder verschieden sind und ein Wasserstoffatom, eine C₁-C₆-Alkylgruppe, eine durch 1 bis 2 Substituenten aus der Gruppe Hydroxy, Acetyl, Methoxy, Ethoxy, Chlor und Brom substituierte C₁-C₆-Alkylgruppe darstellen, oder R² und R³ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden.

4. Pigmentzubereitung nach einem oder mehreren der Ansprüche 1 bis 3, **dadurch gekennzeichnet, daß** Z³ eine der Bedeutungen -(CH₂)₂-NH₂,
-(CH₂)₃-NH₂, -CH₂-CH(CH₃)-NH₂,
-CH₂-C(CH₃)₂-CH₂-NH₂, 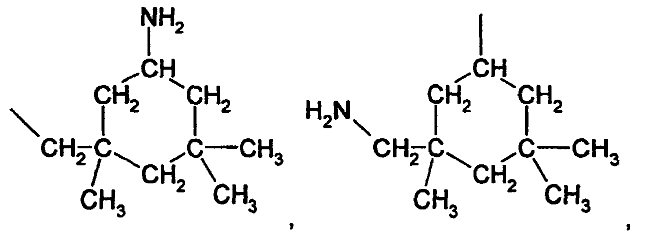 -(CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ oder -(CH₂)₃-N(CH₂-CH₃)₂ hat.

5. Pigmentzubereitung nach einem oder mehreren der Ansprüche 1 bis 4, **dadurch gekennzeichnet, daß** Z⁴ Wasserstoff, Amino, Phenyl, Benzyl, mit NR²R³ substituiertes Phenyl oder Benzyl, C₁-C₆-Alkyl oder ein durch 1 bis 2 Substituenten aus der Gruppe Hydroxy, Acetyl, Methoxy und Ethoxy substituiertes C₂-C₆-Alkyl ist.

6. Pigmentzubereitung nach einem oder mehreren der Ansprüche 1 bis 5, **dadurch gekennzeichnet, daß** das Diketopyrrolopyrrolpigment C.I. Pigment Red 254, C.I. Pigment Red 255, C.I. Pigment Red 264, C.I. Pigment Red 270, C.I. Pigment Red 272, C.I. Pigment Orange 71 oder C.I. Pigment Orange 73 ist.

7. Pigmentzubereitung nach einem oder mehreren der Ansprüche 1 bis 6, enthaltend
i) 40 bis 99 Gew.-%, vorzugsweise 70 bis 98 Gew.-%, der Komponente a),
ii) 1 bis 40 Gew.-%, vorzugsweise 2 bis 30 Gew.-%, mindestens eines Pigmentdispergators gemäß b) der Formel (I),
iii) 0 bis 20 Gew.-%, vorzugsweise 0,1 bis 15 Gew.-%, an oberflächenaktiven Mitteln und
iv) 0 bis 20 Gew.-%, vorzugsweise 0,1 bis 10 Gew.-%, an üblichen Zusatzstoffen,
wobei die Anteile der jeweiligen Komponenten auf das Gesamtgewicht der Zubereitung (100 Gew.-%) bezogen sind.

8. Verfahren zur Herstellung einer Pigmentzubereitung nach einem oder mehreren der Ansprüche 1 bis 7, **dadurch gekennzeichnet, daß** man den oder die Pigmentdispergatoren gemäß b) der Formel (I) sowie das Pigment gemäß Komponente a) miteinander mischt oder an einem beliebigen Zeitpunkt ihres Herstellungsprozesses aufeinander einwirken läßt.

9. Verfahren nach Anspruch 8, **dadurch gekennzeichnet, daß** der oder die Pigmentdispergatoren gemäß b) der Formel (I) vor oder nach der Synthese des Pigments der Komponente a); nach einer Feinverteilung des Pigments der Komponente a), oder nach einem Finish des Pigments der Komponente a) zugegeben werden.

10. Verfahren nach Anspruch 8 oder 9, **dadurch gekennzeichnet, daß** der oder die Pigmentdispergatoren gemäß b) und/oder das Pigment der Komponente a) in Form eines wasserfeuchten Preßkuchens zusammengegeben werden, oder als trockene Granulate oder Pulver miteinander vermischt werden.

11. Verwendung einer Pigmentzubereitung nach einem oder mehreren der Ansprüche 1 bis 7 als Farbmittel zum Pigmentieren von hochmolekularen organischen Materialien, Tinten und Druckfarben, insbesondere Kunststoffe, Harze, Lacke, Anstrichfarben, elektrophotographische Toner und Entwickler, Pulverlacke und Ink-Jet-Tinten.

12. Pigmentpräparation, bestehend im wesentlichen aus einer Pigmentzubereitung gemäß einem oder mehreren der Ansprüche 1 bis 7, einem hochmolekularen organischen Material, insbesondere einem Lack, und gegebenenfalls oberflächenaktiven Mitteln.

## Claims

1. A pigment preparation **characterized by** the presence therein of
a) at least one diketopyrrolopyrrole pigment or a mixed crystal containing a diketopyrrolopyrrole pigment, and
b) at least one pigment dispersant of the formula (I), 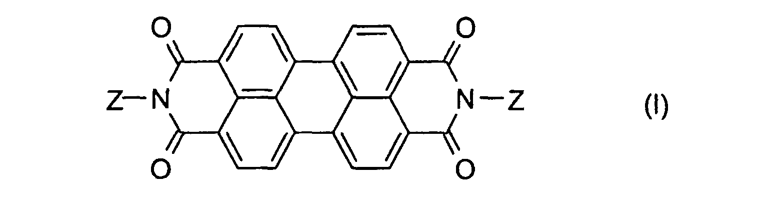
in which the two radicals Z are identical or different and have the definition Z³ or Z⁴ with the proviso that both radicals Z are not simultaneously Z⁴,
and in which
Z³ is a radical of the formula (Ic), 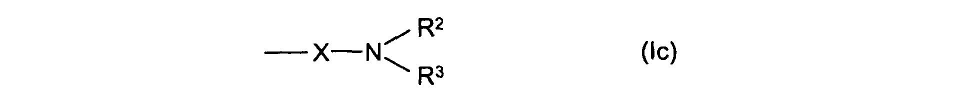
in which
R² and R³ are identical or different and are a hydrogen atom, a substituted or unsubstituted or partly fluorinated or perfluorinated alkyl group having 1 to 20 carbon atoms, or a substituted or unsubstituted or partly fluorinated or perfluorinated alkenyl group having 2 to 20 carbon atoms, possible substituents being hydroxyl, phenyl, cyano, chloro, bromo, C₂-C₄-acyl and C₁-C₄-alkoxy, or
R² and R³ together with the nitrogen atom form a saturated, unsaturated or aromatic heterocyclic ring with or without a further nitrogen, oxygen or sulfur atom in the ring; and
X is a branched or unbranched C₂-C₆-alkylene radical or a C₅-C₇-cycloalkylene radical which can be substituted by from 1 to 4 C₁-C₄-alkyl radicals, hydroxyl radicals, hydroxyalkyl radicals having 1 to 4 carbon atoms and/or by 1 or 2 further C₅-C₇-cycloalkyl radicals;
Z⁴ is hydrogen, hydroxyl, amino, phenyl, (C₁-C₄₎-alkylphenyl or C₁-C₂₀-alkyl, it being possible for the phenyl ring and the alkyl group to be substituted by one or more substituents from the group consisting of Cl, Br, CN, OH, C₆H₅, carbamoyl, C₂-C₄-acyl and C₁-C₄-alkoxy and for the phenyl ring to be substituted by NR²R³ or for the alkyl group to be perfluorinated or partly fluorinated.

2. The pigment preparation as claimed in claim 1, wherein X is C₂-C₄-alkylene or cyclohexylene.

3. The pigment preparation as claimed in claim 1 or 2, wherein R² and R³ are identical or different and are a hydrogen atom, a C₁-C₆-alkyl group, or a C₁-C₆-alkyl group substituted by 1 or 2 substituents from the group consisting of hydroxyl, acetyl, methoxy, ethoxy, chloro and bromo, or R² and R³ together with the adjacent nitrogen atom form an imidazolyl, piperidyl, morpholinyl, pipecolinyl, pyrrolyl, pyrrolidinyl, pyrazolyl or piperazinyl ring.

4. The pigment preparation as claimed in one or more of claims 1 to 3, wherein Z³ has one of the definitions -(CH₂)₂-NH₂,
-(CH₂)₃-NH₂, -CH₂-CH(CH₃)-NH₂, -CH₂-C(CH₃)₂-CH₂-NH₂. 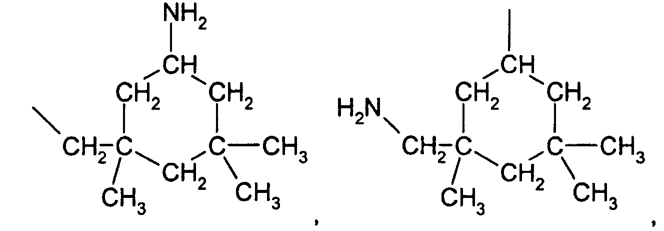 -(CH₂)₂-NH-CH₃, -(CH₂)₂-N(CH₃)₂, -(CH₂)₂-NH-CH₂-CH₃, -(CH₂)₂-N(CH₂-CH₃)₂, -(CH₂)₃-NH-CH₃, -(CH₂)₃-N(CH₃)₂, -(CH₂)₃-NH-CH₂-CH₃ and -(CH₂)₃-N(CH₂-CH₃)₂.

5. The pigment preparation as claimed in one or more of claims 1 to 4, wherein Z⁴ is hydrogen, amino, phenyl, benzyl, NR²R³-substituted phenyl or benzyl, C₁-C₆-alkyl or a C₂-C₆-alkyl substituted by 1 or 2 substituents from the group consisting of hydroxyl, acetyl, methoxy and ethoxy.

6. The pigment preparation as claimed in one or more of claims 1 to 5, wherein the diketopyrrolopyrrole pigment is C.I. Pigment Red 254, C.I. Pigment Red 255, C.I. Pigment Red 264, C.I. Pigment Red 270, C.I. Pigment Red 272, C.I. Pigment Orange 71 or C.I. Pigment Orange 73.

7. The pigment preparation as claimed in one or more of claims 1 to 6, comprising
i) from 40 to 99% by weight, preferably from 70 to 98% by weight, of component a);
ii) from 1 to 40% by weight, preferably from 2 to 30% by weight, of at least one pigment dispersant as per b) of the formula (I);
iii) from 0 to 20% by weight, preferably from 0.1 to 15% by weight, of surface-active agents; and
iv) from 0 to 20% by weight, preferably from 0.1 to 10% by weight, of conventional additives,
the fractions of the respective components being based on the overall weight of the preparation (100% by weight).

8. A process for producing a pigment preparation as claimed in one or more of claims 1 to 7, which comprises mixing the pigment dispersant(s) of b) of the formula (I) and the pigment as per component a) with one another or allowing them to act on one another at any desired point in time during their production process.

9. The process as claimed in claim 8, wherein the pigment dispersant(s) of b) of the formula (I) is or are added prior to or following the synthesis of the pigment as per component a); following fine division of the pigment of component a); or following a finish operation on the pigment of component a).

10. The process as claimed in claim 8 or 9, wherein the pigment dispersant(s) of b) and/or the pigment of component a) are combined in the form of a water-moist presscake or are mixed with one another in the form of dry granules or powders.

11. The use of a pigment preparation as claimed in one or more of claims 1 to 7 as a colorant for pigmenting high molecular mass organic materials, writing, drawing and printing inks, especially plastics, resins, varnishes, paints, electrophotographic toners and developers, powder coating materials and inkjet inks.

12. A prepared pigment formulation consisting essentially of a pigment preparation as claimed in one or more of claims 1 to 7, a high molecular mass organic material, especially a varnish, and, if desired, surface-active agents.

## Revendications

1. Préparation pigmentaire, **caractérisée par** une teneur en
a) au moins un pigment dicétopyrrolopyrrole ou une solution solide contenant des pigments dicétopyrrolopyrrole, et
b) au moins un dispersateur de pigments de formule générale (I) 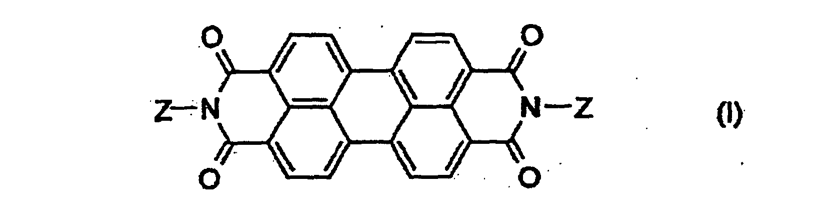
dans laquelle les deux radicaux Z sont identiques ou différents et Z représente Z³ ou Z⁴, avec la condition que les deux radicaux Z ne représentent pas en même temps Z⁴,
et dans laquelle
Z³ est un radical de formule (Ic) 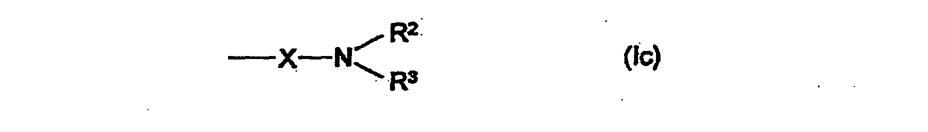
dans laquelle
R² et R³ sont identiques ou différents et représentent un atome d'hydrogène, un groupe alkyle substitué ou non substitué, ou partiellement ou perfluoré avec de 1 à 20 atomes de carbone, ou un groupe alcényle substitué ou non substitué, ou partiellement ou perfluoré avec de 2 à 20 atomes de carbone, les substituants pouvant être un hydroxy, phényle, cyano, chlore, brome, acyle en C₂ à C₄ ou alcoxy en C₁ à C₄, ou
R² et R³ ensemble avec l'atome d'azote forment un cycle saturé, insaturé ou aromatique hétérocyclique, qui contient éventuellement un autre atome d'azote, d'oxygène ou de soufre dans le cycle ; et
X représente un radical alkylène en C₂ à C₆ ramifié ou non ramifié ou un radical cycloalkylène en C₅ à C₇, qui peut être substitué par 1 à 4 radicaux alkyle en C₁ à C₄, radicaux hydroxy, radicaux hydroxyalkyle avec de 1 à 4 atomes de carbone et/ou par 1 ou 2 autres radicaux cycloalkyle en C₅ à C₇ ;
Z⁴ représente un hydrogène, hydroxy, amino, phényle, (alkyle en C₁ à C₄)-phényle ou alkyle en C₁ à C₂₀, dans lequel le cycle phényle et le groupe alkyle peuvent être substitués par un ou plusieurs substituants dans le groupe Cl, Br, CN, OH, C₆H₅, carbamoyle, acyle en C₂ à C₄ et alcoxy en C₁ à C₄, le cycle phényle peut aussi être substitué par NR²R³ ou le groupe alkyle est perfluoré ou partiellement fluoré.

2. Préparation pigmentaire selon la revendication 1, **caractérisée en ce que** X représente un alkylène en C₂ à C₄ ou cyclohexylène.

3. Préparation pigmentaire selon la revendication 1 ou 2, **caractérisée en ce que** R² et R³ sont identiques ou différents et représentent un atome d'hydrogène, un groupe alkyle en C₁ à C₆, un groupe alkyle en C₁ à C₆ substitué par 1 à 2 substituants dans le groupe hydroxy, acétyle, méthoxy, éthoxy, chlore et brome, ou R² et R³ forment ensemble avec l'atome d'azote voisin un cycle imidazolyle, pipéridinyle, morpholinyle, pipécolinyle, pyrrolyle, pyrrolidinyle, pyrazolyle ou pipérazinyle.

4. Préparation pigmentaire selon une ou plusieurs des revendications 1 à 3, **caractérisée en ce que** Z³ a l'une des significations -(CH₂)₂-NH₂, -(CH₂)₃-NH₂, -CH₂-CH(CH₃)-NH₂, -CH₂-C(CH₃)₂-CH₂-NH₂, 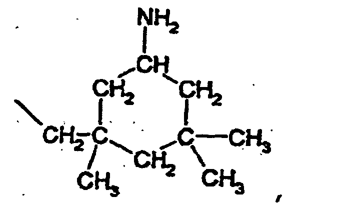 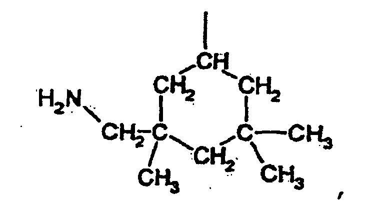 - (CH₂)₂-NH-CH₃, - (CH₂)₂-N(CH₃)₂, - (CH₂)₂-NH-CH₂-CH₃, - (CH₂)₂-N(CH₂-CH₃)₂, - (CH₂)₃-NH-CH₃, -(CH₂)₃-N(CH₃)₂, -(CH₂)₃-NH-CH₂-CH₃ ou -(CH₂)₃-N(CH₂-CH₃)₂.

5. Préparation pigmentaire selon une ou plusieurs des revendications 1 à 4, **caractérisée en ce que** Z⁴ est un atome d'hydrogène, un amino, phényle, benzyle, phényle ou benzyle substitué avec NR²R³, alkyle en C₁ à C₆ ou un alkyle en C₂ à C₆ substitué par 1 à 2 substituants dans le groupe hydroxy, acétyle, méthoxy et éthoxy.

6. Préparation pigmentaire selon une ou plusieurs des revendications 1 à 5, **caractérisée en ce que** le pigment dicétopyrrolopyrrole est C.I. Pigment Red 254, C.I. Pigment Red 255, C.I. Pigment Red 264, C.I. Pigment Red 270, C.I. Pigment Red 272, C.I. Pigment Orange 71 ou C.I. Pigment Orange 73.

7. Préparation pigmentaire selon une ou plusieurs des revendications 1 à 6, contenant
i) 40 à 99 % en poids, de préférence 70 à 98 % en poids, du composant a),
ii) 1 à 40 % en poids, de préférence 2 à 30 % en poids, d'au moins un dispersateur de pigments selon b) de formule (I),
iii) 0 à 20 % en poids, de préférence 0,1 à 15 % en poids, d'agents tensio-actifs et
iv) 0 à 20 % en poids, de préférence 0,1 à 10 % en poids, d'additifs usuels,
les proportions des composants respectifs étant rapportées au poids total de la préparation (100 % en poids).

8. Procédé pour la fabrication d'une préparation pigmentaire selon une ou plusieurs des revendications 1 à 7, **caractérisé en ce que** l'on mélange ensemble le ou les dispersateurs de pigments selon b) de formule (I) ainsi que le pigment comme composant a) ou on laisse réagir l'un avec l'autre à un moment quelconque de leur procédé de préparation.

9. Procédé selon la revendication 8, **caractérisé en ce que** le ou les dispersateurs de pigments selon b) de formule (I) sont ajoutés avant ou après la synthèse du pigment du composant a) ; après une dispersion fine du pigment du composant a), ou après un fini du pigment du composant a).

10. Procédé selon la revendication 8 ou 9, **caractérisé en ce que** le ou les dispersateurs de pigments selon b) et/ou le pigment du composant a) sont ajoutés ensemble sous la forme d'un gâteau de filtre-presse humide, ou sont mélangés ensemble sous forme de granulés ou de poudre secs.

11. Utilisation d'une préparation pigmentaire selon une ou plusieurs des revendications 1 à 7 comme colorant pour la pigmentation de matériaux organiques de masse moléculaire élevée, d'encres et de colorants d'impression, en particulier de matières synthétiques, de résines, de laques, de peintures, de toners et révélateurs électrophotographiques, de vernis en poudre et d'encres pour jet d'encre.

12. Préparation pigmentaire, constituée essentiellement d'une préparation de pigments selon une ou plusieurs des revendications 1 à 7, d'un matériau organique de masse moléculaire élevée, en particulier d'une laque, et éventuellement d'agents tensio-actifs.
